# FASCICULE DE BREVET EUROPEEN

(11) **EP 1 740 892 B1**
(45) Date de publication et mention de la délivrance du brevet: **09.01.2008**
(21) Numéro de dépôt: 05718497.0
(22) Date de dépôt: 21.04.2005
(51) Int. Cl.: F25B 21/00

(54) **DISPOSITIF ET PROCEDE DE GENERATION DE THERMIES A MATERIAU MAGNETO-CALORIQUE**
VORRICHTUNG UND VERFAHREN ZUR ERZEUGUNG VON WÄRMEEINHEITEN MIT MAGNETOKALORISCHEM MATERIAL
DEVICE AND METHOD FOR GENERATING THERMAL UNITS WITH MAGNETOCALORIC MATERIAL

(30) Priorité: 23.04.2004 FR 0404306
(43) Date de publication de la demande: 10.01.2007
(73) Titulaire: Cooltech Applications, 67810 Holtzheim (FR)
(72) Inventeur: MULLER, Christian, 67000 Strasbourg (FR); DUPIN, Jean-Louis, 68320 Muntzenheim (FR); HEITZLER, Jean-Claude, 68180 Horbourg-Wihr (FR)
(74) Mandataire: Nithardt, Roland
(86) Numéro de dépôt international: PCT/IB2005/001059
(87) Numéro de publication internationale: WO 2005/103585

(56) Documents cités:
- EP-A- 0 104 713
- FR-A- 2 574 913
- US-B1- 6 595 004
- YU B F ET AL: "Review on research of room temperature magnetic refrigeration" INTERNATIONAL JOURNAL OF REFRIGERATION, OXFORD, GB, vol. 26, no. 6, septembre 2003 (2003-09), pages 622-636, XP004436370 ISSN: 0140-7007

## Description

### Domaine technique :

La présente invention concerne un dispositif de génération de thermies à matériau magnéto-calorique comportant au moins un élément magnétique destiné à générer un champ magnétique, au moins un élément magnéto-calorique destiné à être soumis de manière alternée audit champ magnétique pour générer des calories et des frigories, au moins un circuit de fluide caloporteur dont au moins une portion est disposée dans l'environnement immédiat de l'élément magnéto calorique de manière à récupérer au moins une partie des calories et/ou frigories qu il émet, ledit circuit étant couplé à des moyens de circulation du fluide caloporteur et à au moins un échangeur thermique agencé pour transférer au moins une partie des calories et/ou frigories récupérées par ledit fluide caloporteur. L'invention concerne également un procédé de génération de thermies utilisant ledit dispositif.

### Technique antérieure :

De manière connue, les générateurs thermiques à matériau magnéto-calorique comportent des moyens magnétiques fixes et des éléments magnéto-caloriques mobiles couplés à des moyens de déplacement, ou inversement. Ainsi, les éléments magnéto-caloriques sont alternativement soumis à la présence et à l'absence de champ magnétique et génèrent alternativement des calories et des frigories. Ces thermies sont récupérées par des fluides caloporteurs traversant les éléments magnéto-caloriques et raccordés à des circuits "chaud" et "froid" comportant des échangeurs thermiques pour chauffer et/ou refroidir et/ou tempérer et/ou climatiser par exemple un milieu ambiant, une enceinte, un local, l'intérieur d'un contenant.

Dans le cas où les éléments magnéto-caloriques sont mobiles par rapport aux moyens magnétiques, il est très difficile de garantir une bonne étanchéité entre les tronçons traversant les éléments magnéto-caloriques et les circuits "chaud" et "froid" et les fuites sont fréquentes.

Les moyens magnétiques comportent généralement un assemblage magnétique, un aimant permanent, un électro-aimant, un aimant supraconducteur, un électro-aimant supra-conducteur, un supra-conducteur. Les aimants permanents ne permettent pas d'obtenir des résultats satisfaisants en terme de puissance magnétique. Par rapport à ce critère, les meilleurs résultats sont obtenus par les électro-aimants et électro-aimants supra-conducteurs. Malheureusement, les électro-aimants sont de très grands consommateurs d'énergie électrique ce qui les rend onéreux à utiliser. De plus, ils s'échauffent rapidement et l'évacuation de leurs calories complique la construction des générateurs thermiques. De plus, la technique des électro-aimants supraconducteurs est très coûteuse.

D'autre part, l'utilisation d'électro-aimants permet de faire varier leur champ magnétique en les alimentant par un courant électrique variable. Cette solution présente l'avantage de supprimer tout mouvement relatif entre les éléments magnéto-caloriques et les moyens magnétiques. Les publications FR-A-2 574 913, EP-A-0 104 713 et US-B-6,595,004 décrivent des exemples d'alimentation électrique à courant variable, certains étant limités à des électro-aimants supraconducteurs non compatibles avec la présente invention. De même, l'alimentation électrique par courant variable ne permet pas d'obtenir des résultats satisfaisants en terme de consommation d'énergie et de coût.

Les solutions existantes ne sont donc pas satisfaisantes.

### Exposé de l'invention :

La présente invention vise à pallier ces inconvénients en proposant un dispositif de génération de thermies à matériau magnéto-calorique faible consommateur d'énergie, évolutif, de conception simple, de fonctionnement fiable, permettant la génération de thermies de manière économiquement rentable tout en supprimant les risques de fuite de liquide thermique et en limitant le nombre de pièces mécaniques.

Dans ce but, l'invention concerne un dispositif de génération de thermies du genre indiqué en préambule, caractérisé en ce que l'élément magnétique est un électro-aimant couplé à au moins une alimentation électrique asservie par au moins une unité de commande agencée pour générer des impulsions électriques de manière à créer un champ magnétique impulsionnel, ces impulsions électriques d'intensité I, de durée t et de fréquence T étant déclenchées en fonction d'au moins un paramètre d'impulsion prédéterminé, ledit dispositif comportant au moins un capteur thermique agencé pour déterminer la température dudit fluide caloporteur, cette température de fluide définissant au moins un paramètre d'impulsion.

Les moyens de récupération comportent de préférence au moins deux échangeurs thermiques reliés au circuit en série, en parallèle ou selon une combinaison série/parallèle.

De manière préférentielle, les moyens de récupération comportent au moins un échangeur thermique de calories agencé pour transférer les calories et au moins un échangeur thermique de frigories agencé pour transférer les frigories, les échangeurs thermiques étant couplés à des moyens de commutation asservis par une unité de commande agencée pour raccorder successivement chaque échangeur thermique à l'élément magnéto-calorique en fonction d'au moins un paramètre de commutation prédéterminé.

L'unité de commande peut être agencée pour que la fréquence T soit comprise entre 60 secondes et 1/150^{ème} secondes et de préférence inférieure à 2 secondes.

L'unité de commande peut également être agencée pour que le rapport T/t soit compris entre 10 et 100 000, et de préférence supérieur à 1000.

L'unité de commande peut enfin être agencée pour que l'intensité 1 génère dans l'élément magnétique un champ magnétique compris entre 0,05 Tesla et 10 Teslas, et de préférence supérieure à 2 Teslas.

Selon une forme de réalisation préférée, l'unité de commande comporte des moyens de réglage de l'un au moins des paramètres de l'impulsion électrique choisi dans le groupe comprenant la durée t, la fréquence T, l'intensité I.

Selon une forme de réalisation préférée, unité de commande comporte des moyens de temporisation agencés pour déterminer l'intervalle de temps écoulé depuis la commutation et/ou l'impulsion électrique précédente, cet intervalle de temps définissant au moins un paramètre de commutation et/ou d'impulsion.

A cet effet, l'unité de commande peut comporter des moyens de réglage du paramètre de commutation et/ou d'impulsion prédéterminé.

Les moyens de récupération comportent avantageusement au moins un échangeur "mixte" agencé pour transférer les calories et les frigories par exemple dans le milieu ambiant.

Le dispositif comporte de préférence au moins deux éléments magnéto-caloriques raccordés entre eux en série, en parallèle ou selon une combinaison série/parallèle, les éléments magnéto-caloriques pouvant avoir ces caractéristiques magnéto-caloriques différentes.

De manière avantageuse, le dispositif comporte au moins deux électro-aimants, chacun associé à un élément magnéto-calorique et au moins deux alimentations électriques agencées pour alimenter électriquement les électro-aimants de manière dissociée.

De manière préférentielle, le noyau dudit électro-aimant est réalisé dans un matériau magnétique à forte rémanence.

L'élément magnétique et l'élément magnéto-calorique sont de préférence fixes l'un par rapport à l'autre.

L'invention concerne également un procédé de génération de thermies au cours duquel on utilise le dispositif précédent.

Lors de ce procédé, on peut utiliser au moins deux éléments magnéto-caloriques, chacun associé à un électro-aimant, et au moins deux alimentations électriques, et, dans des phases successives, utiliser un premier élément magnéto-calorique seul puis un premier et un second éléments magnéto-caloriques simultanément et enfin le second élément magnéto-calorique seul de manière à combiner les propriétés magnéto-caloriques des premier et second éléments magnéto-caloriques.

### Description sommaire des dessins :

La présente invention et ses avantages apparaîtront mieux dans la description suivante de plusieurs modes de réalisation en référence aux dessins annexés donnés à titre d'exemples non limitatifs, dans lesquels :
- la figure 1 est une vue schématique du dispositif selon l'invention,
- les figures 2A et 2B sont des courbes illustrant le fonctionnement du dispositif de la figure 1 respectivement selon les modes de refroidissement et de chauffage,
- la figure 3 est une vue schématique d'une première variante de réalisation du dispositif selon l'invention,
- la figure 4 est une courbe illustrant un mode de fonctionnement du dispositif de la figure 3,
- la figure 5 est une vue schématique d'une seconde variante de réalisation du dispositif selon 1 l'invention,
- les figures 6A et 6B sont des courbes illustrant le fonctionnement du dispositif de la figure 5 respectivement selon les modes refroidissement et chauffage, et
- la figure 7 est un schéma de l'unité de commande du dispositif selon l'invention.

### Illustrations de l'invention :

Par souci de simplification on utilisera les termes "dispositif" et "procédé" pour remplacer les termes "dispositif de génération de thermies à matériau magnéto-calorique" et "procédé de génération de thermies à matériau magnéto-calorique".

Par ailleurs, on entend par le terme "échangeur thermique" tout moyen permettant le transfert et/ou la diffusion de calories et/ou de frigories.

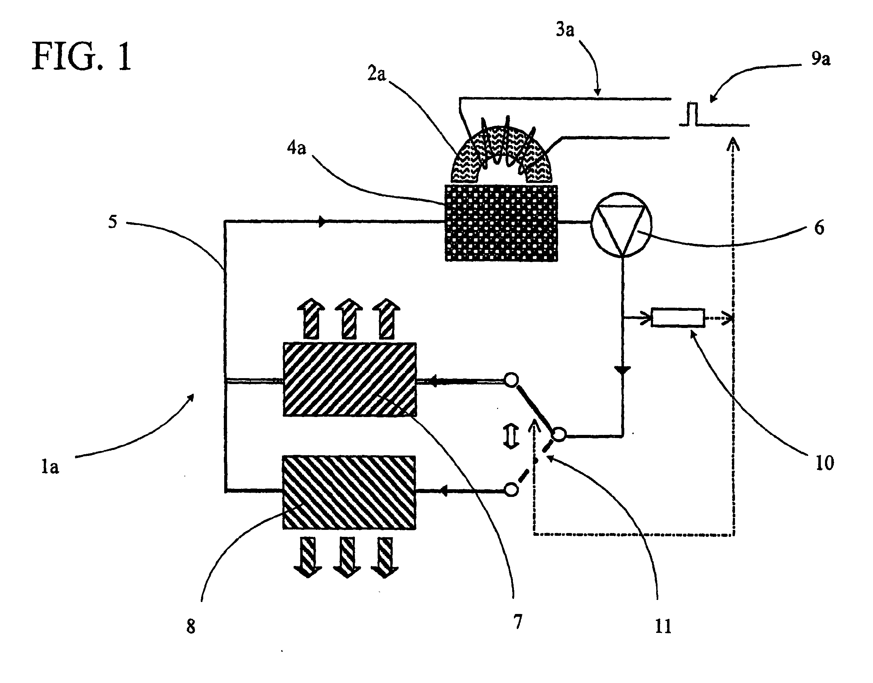

En référence à la figure 1, le dispositif 1a comporte un élément magnétique 2a couplé à une alimentation électrique 3a, un élément magnéto-calorique 4a, un circuit de fluide caloporteur 5 dans lequel un ou plusieurs fluides caloporteurs sont mis en circulation par des moyens de circulation 6, et deux échangeurs thermiques 7, 8.

L'élément magnéto-calorique 4a contient un matériau magnéto-calorique tel que par exemple du gadolinium (Gd), un alliage de gadolinium comportant du silicium (Si), du germanium (Ge), du fer (Fe), du magnésium (Mg), du phosphore (P), de l'arsenic (As) ou tout autre matériau équivalent. Ce matériau magnéto-calorique se présente par exemple sous la forme d'un bloc, de pastilles, de poudre, d'agglomérat, de morceaux.

Les caractéristiques magnéto-caloriques de l'élément magnéto-calorique 4a. sont telles que :
- lorsqu'il est soumis à la présence d'un champ magnétique, l'élément magnéto-calorique 4a s'échauffe sous l'effet magnéto-calorique chauffant, et que,
- lorsque le champ magnétique disparaît ou diminue, l'élément magnéto-calorique 4a continue de s'échauffer sous l'effet de l'inertie magnéto-calorique, et que,
- après épuisement de cette inertie magnéto-calorique, l'élément magnéto-calorique 4a se refroidit à une température inférieure à sa température initiale sous l'effet magnéto-calorique refroidissant.
Le principe de fonctionnement du dispositif la consiste donc à soumettre l'élément magnéto-calorique 4a à une variation de champ magnétique pour générer des calories et des frigories utilisées pour chauffer, refroidir, climatiser, tempérer, une enceinte, un milieu ambiant, etc.

Pour ce faire, on utilise comme élément magnétique un électro-aimant 2a que l'on dispose dans l'environnement proche à l'élément magnéto-calorique 4a pour qu'il soit soumis au champ magnétique. On alimente électriquement l'électro-aimant 2a au moyen d'une alimentation électrique 3a générant un courant électrique impulsionnel de manière à obtenir une modification du champ magnétique. L'élément magnéto-calorique 4a ainsi soumis à un champ magnétique impulsionnel génère des calories et des frigories. On choisira de préférence mais non exclusivement un électro-aimant 2a dont le noyau magnétique est réalisé dans un matériau magnétique à forte rémanence, comme par exemple les alliages fer cobalt, les terres rares, les ferrites, les alliages de fer et de silicium, le fer, le nickel.

Ces calories et frigories sont récupérées par le fluide caloporteur circulant dans la portion du circuit 5 de fluide caloporteur disposée dans l'environnement immédiat de l'élément magnéto-calorique 4a. L'élément magnéto-calorique 4a est par exemple traversé par cette portion. Le circuit 5 est réalisé par exemple de manière traditionnelle par assemblage de tuyaux ou par tout autre moyen adapté. Le circuit 5 comporte des moyens de circulation 6 du fluide caloporteur tels que par exemple une pompe ou tout autre moyen équivalent.

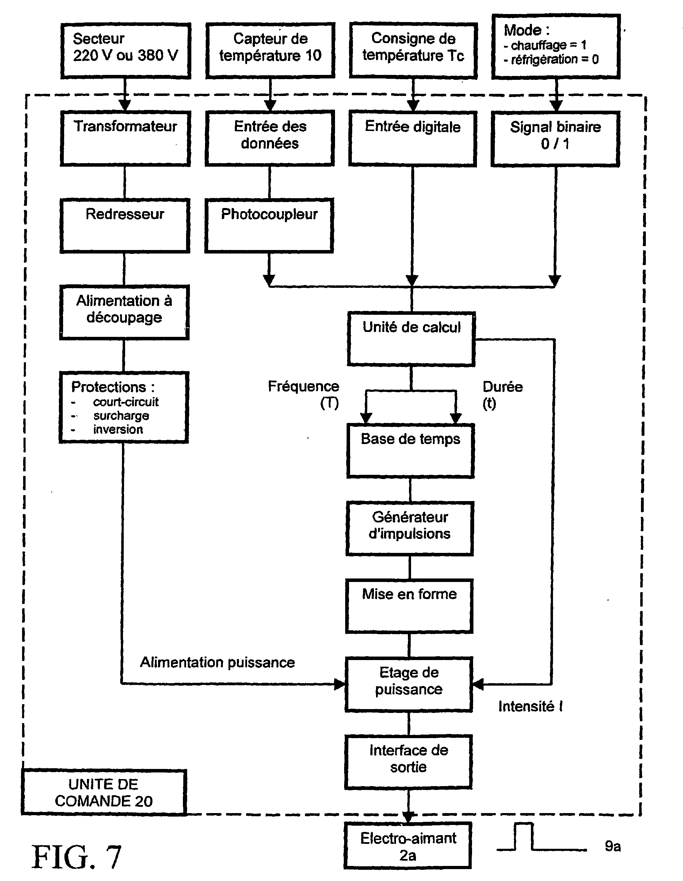

Dans cet exemple, l'alimentation électrique 3a est asservie par une unité de commande 20 (cf. fig. 7) générant des impulsions électriques 9a successives d'intensité I, de durée t, à une fréquence T, ces caractéristiques pouvant être réglables.

Ces impulsions électriques 9a sont générées en fonction d'un ou de plusieurs paramètres d'impulsion prédéterminés, par exemple en fonction de la température du fluide caloporteur et/ou de l'intervalle de temps écoulé depuis l'impulsion électrique 9a précédente. A cet effet, le dispositif la comporte un capteur thermique 10 et/ou des moyens de temporisation (non représentés).

Le capteur thermique 10 permet de déterminer la température du fluide caloporteur, par exemple à la sortie de l'élément magnéto-calorique 4a. Cette détermination est réalisée de manière absolue par exemple par mesure en degrés, par détection d'un seuil de température ou, de manière relative par comparaison, par exemple en degrés, par rapport à une autre température. La température déterminée est comparée à une consigne de température prédéterminée. Lorsque la consigne de température est atteinte, l'impulsion électrique 9a est générée.

Les moyens de temporisation permettent de déterminer l'intervalle de temps écoulé par exemple depuis l'impulsion électrique 9a précédente et de le comparer à une consigne de temps prédéterminée. Lorsque la consigne de temps est atteinte, l'impulsion électrique 9a est générée. Les moyens de temporisation sont par exemple ' des circuits électroniques, des circuits pneumatiques, une combinaison de circuits électroniques et pneumatiques ou tout autre moyen connu.

Dans cet exemple, le dispositif 1a comporte un échangeur de calories 7 pour transférer les calories et un échangeur de frigories 8 pour transférer les frigories. Ces échangeurs thermiques 7, 8 sont reliés en parallèle au circuit 5 de fluide caloporteur par des moyens de commutation 11 asservis par une unité de commande, qui peut être la même que celle qui asservit l'alimentation électrique 3a, et permettant de raccorder successivement chaque échangeur thermique 7, 8 à l'élément magnéto-calorique 4a.

Cette commutation est effectuée en fonction d'un ou de plusieurs paramètres de commutation prédéterminés, par exemple en fonction de 1 intervalle de temps écoulé depuis l'impulsion électrique 9a et/ou depuis la commutation précédente et/ou en fonction de la température du fluide caloporteur. A cet effet, l'unité de commande comporte des moyens de temporisation et/ou un capteur thermique 10.

Les moyens de temporisation et/ou le capteur thermique 10 peuvent être les mêmes que les précédents. Lorsque la consigne de temps et/ou la consigne de température est atteinte, les moyens de commutation 11 mettent en communication l'élément magnéto-calorique 4a avec un échangeur thermique 7 puis avec l'autre 8. Ces moyens de commutation 11 comportent par exemple une vanne, un tiroir à commande électrique, pneumatique, hydraulique, un interrupteur ou tout autre moyen adapté.

Il est bien évident que l'unité de commande 20 peut comporter plusieurs capteurs thermiques 10 et/ou plusieurs moyens de temporisation et/ou utiliser un autre paramètre d'impulsion et/ou de commutation.

L'unité de commande 20 schématisée à la figure 7 est donnée à titre d'exemple non limitatif. Elle comporte un étage de puissance alimenté par le secteur en 220 ou 380 V au travers d'un transformateur suivi d'un redresseur, d'une alimentation à découpage et de protections contre les court-circuits, les surcharges et les inversions de phases. Elle comporte également une unité de calcul commandée par au moins trois données : la température du fluide caloporteur mesurée par le capteur de température 10, une consigne de température Tc et le mode de fonctionnement soit en mode chauffage, soit en mode réfrigération. Cette unité de calcul génère trois données : la durée t des impulsions électriques et leur fréquence T ainsi que leur intensité I. L'intensité I alimente l'étage de puissance tandis que la durée t et la fréquence T alimentent une base de temps couplée à un générateur d'impulsions électriques par exemple du type à transistors, à triacs, à thyristors, à lampe, à induction, à décharge, à blocage de courant et de manière préférentielle un générateur d'impulsions électriques de puissance à transistors. Les impulsions électriques 9a générées sont transmises à l'étage de puissance au travers d'un module de mise en forme, avant d'alimenter l'électro-aimant 2a au travers d'une interface de sortie. Les différents modules entrant dans cette unité de commande 20 ne sont pas détaillés étant donné qu'ils font partie des connaissances normales d'un électronicien.

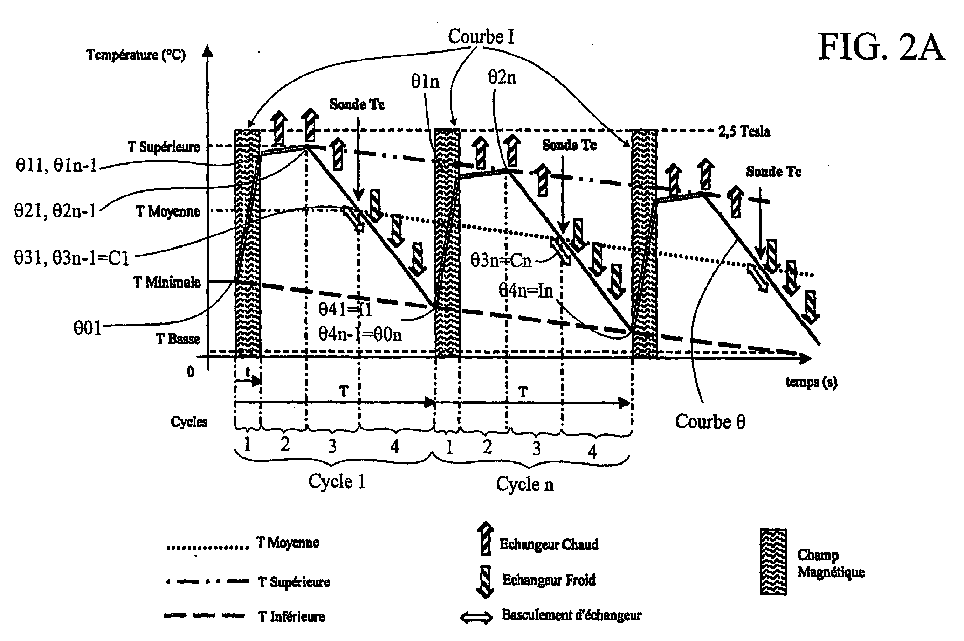

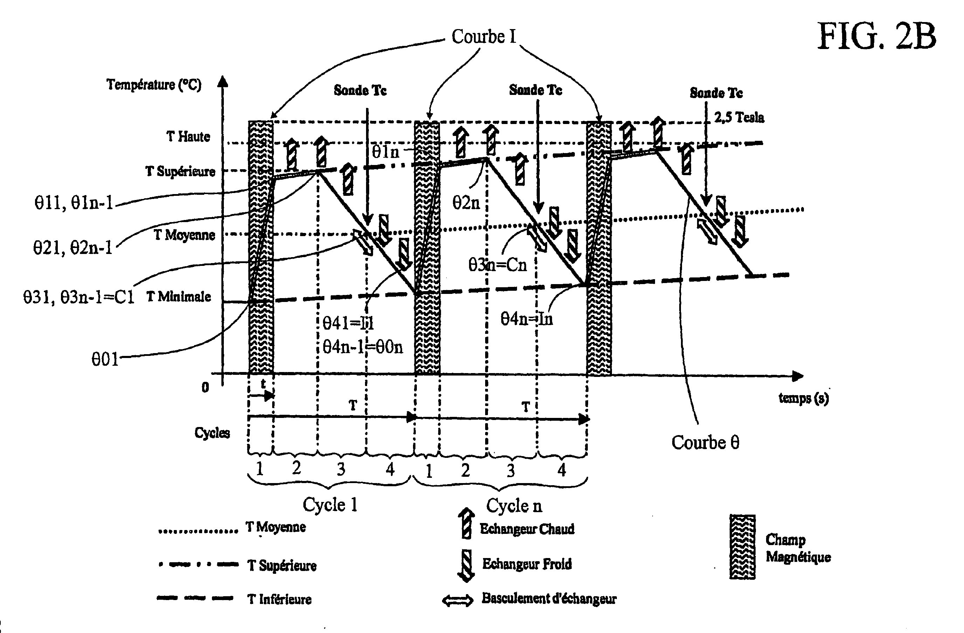

Le procédé utilisant ce dispositif la est décrit en référence aux courbes d'impulsion "Courbe I" et de température "Courbe θ" du fluide caloporteur illustrées par les figures 2A et 2B, respectivement selon des modes "refroidissement" et "chauffage".

En mode "refroidissement" illustré par les courbes de la figure 2A, le procédé se décompose en plusieurs cycles successifs comprenant chacun plusieurs étapes successives.
Cycle 1 (démarrage) :
   Préparation : On positionne les moyens de commutation 11 de sorte que l'élément magnéto-calorique 4a soit raccordé à l'échangeur de calories 7.
Démarrage :
   On alimente l'électro-aimant 2a par une impulsion électrique 9a d'intensité I qui génère dans l'électro-aimant 2a un champ magnétique compris entre 0,05 Tesla et 10 Teslas, et de préférence supérieure à 2 Teslas, de durée t comprise entre 10⁻⁹ seconde et 60 secondes et de préférence inférieure à 10⁻² seconde.
Etape 1 - cycle 1 :
   Pendant l'impulsion électrique 9a, l'électro-aimant 2a génère un champ magnétique.
   L'élément magnéto-calorique 4a soumis à ce champ magnétique subit l'effet magnéto-calorique chauffant et s'échauffe.
   Le fluide caloporteur traversant l'élément magnéto-calorique 4a est soumis à cet échauffement et est ainsi chauffé jusqu'à une température θ11 (température étape 1 cycle 1) supérieure à la température θ01 de départ.
   Le fluide caloporteur est transporté vers l'échangeur de calories 7 qui transfère les calories dans le milieu ambiant.
Etape 2 - cycle 1 :
   Après l'impulsion électrique 9a, l'électro-aimant 2a n'est plus alimenté électriquement et ne génère plus de champ magnétique.
   L'élément magnéto-calorique 4a continue à s'échauffer, soumis à l'inertie de l'effet magnéto-calorique chauffant.
   Le fluide caloporteur traversant l'élément magnéto-calorique 4a continue ainsi a être chauffé jusqu'à une température θ21 (température étape 2 cycle 1) supérieure à la température θ11 et correspondant à la température maximale du fluide caloporteur lors de ce cycle 1.
   Le fluide caloporteur est transporté vers l'échangeur de calories 7 qui transfère les calories vers le milieu ambiant.
Etape 3 - cycle 1 :
   L'inertie de l'effet magnéto-calorique chauffant cesse.
   L'élément magnéto-calorique 4a, soumis à l'absence de champ magnétique, subit l'effet magnéto-calorique refroidissant et se refroidit.
   Le fluide caloporteur traversant l'élément magnéto-calorique 4a est soumis à son refroidissement et est ainsi refroidi jusqu'à une température θ31 (température étape 3 cycle 1) inférieure à la température θ21.
   Le fluide caloporteur est transporté vers l'échangeur de calories 7 qui transfère les calories vers le milieu ambiant.
   Lorsque :
   - les moyens de temporisation détectent que l'intervalle de temps écoulé depuis l'impulsion électrique 9a précédente, ou
   - le capteur thermique 10 détecte que l'écart entre les températures θ31 et θ21 ou θ11 ou θ01 du fluide caloporteur,
   est égal ou inférieur à la consigne de commutation C1, les moyens de commutation 11 basculent et raccordent l'élément magnéto-calorique 4a à l'échangeur de frigories 8.
Etape 4 - cycle 1 :
   L'élément magnéto-calorique 4a continue à se refroidir.
   Le fluide caloporteur traversant l'élément magnéto-calorique 4a continue à être refroidi jusqu'à une température θ41 (température étape 4 cycle 1) inférieure à la température θ01 correspondant à la température de départ du fluide caloporteur lors de ce cycle 1.
   Le fluide caloporteur est transporté vers l'échangeur de frigories 8 qui transfère les frigories vers le milieu ambiant.
   Lorsque:
   - les moyens de temporisation détectent que le temps écoulé depuis l'impulsion électrique 9a précédente, ou
   - le capteur thermique 10 détecte que l'écart entre les températures θ41 et θ31 ou θ01 ou θ11 ou θ21 du fluide caloporteur,
   est égal ou supérieur à la consigne d'impulsion I1, l'unité de commande génère une nouvelle impulsion électrique 9a qui alimente l'électro-aimant 2a, cette impulsion électrique 9a pouvant être sensiblement similaire à l'impulsion électrique 9a initiale ou différente selon les besoins.
   De manière simultanée dans cet exemple, les moyens de commutation 11 raccordent à nouveau l'élément magnéto-calorique 4a à l'échangeur de calories 7.
   Il est bien entendu que cette commutation peut être légèrement décalée dans le temps, réalisée dans une étape 5, de manière à ne raccorder l'élément magnéto-calorique 4a à l'échangeur de calories 7 que lorsque le fluide caloporteur, sous l'effet de la nouvelle impulsion électrique 9a et du champ magnétique, atteint une certaine température.

On règle les consignes d'impulsion In de sorte que le rapport T/t de la fréquence T entre deux impulsions électriques 9a sur la durée t de l'impulsion électrique 9a considérée, soit compris entre 10 et 100 000, et de préférence supérieur à 1000.
On passe ensuite au cycle 2.

Les cycles de fonctionnement suivants sont sensiblement similaires au premier cycle et se déroulent comme suit pour le fluide caloporteur :
Etape 1- cycle n :
   Pendant l'impulsion électrique 9a, chauffage du fluide caloporteur jusqu'à une température θ1n (température étape 1 cycle en cours), supérieure à la température θ4n-1 (température étape 4 cycle précédent) mais inférieure à la température θ1n-1 (température étape 1 cycle précédent). Transfert des calories par l'échangeur de calories 7.
Etape 2 - cycle n :
   Après l'impulsion électrique 9a, sous de l'inertie de l'effet magnéto-calorique chauffant, chauffage du fluide caloporteur jusqu'à une température θ2n (température étape 2 cycle en cours) supérieure à la température θ1n (température étape 1 cycle en cours) correspondant à la température maximale du fluide caloporteur lors de ce cycle, mais inférieure à la température θ2n-1 (température étape 2 cycle précédent) correspondant à la température maximale du fluide caloporteur lors du cycle précédent. Transfert des calories par l'échangeur de calories 7.
Etape 3 - cycle n :
   A la fin de l'inertie de l'effet magnéto-calorique chauffant, effet magnéto-calorique refroidissant. Refroidissement du fluide caloporteur jusqu'à une température θ3n (température étape 3 cycle en cours) inférieure à la température θ2n et inférieure à la température θ2n-1 (température étape 2 cycle précédent). Transfert des calories par l'échangeur de calories 7.
   Détection de la consigne de commutation Cn et commutation pour raccorder l'élément magnéto-calorique 4a à l'échangeur de frigories 8.
Etape 4 - cycle n :
   Effet magnéto-calorique refroidissant, refroidissement du fluide caloporteur jusqu'à une température θ4n (température étape 4 cycle en cours) inférieure à la température θ0n et correspondant à la température de départ du fluide caloporteur de ce cycle n. Transfert des frigories par l'échangeur de frigories 8. Détection de la consigne d'impulsion In et alimentation de l'électro-aimant 2a par une nouvelle impulsion électrique 9a.
   Simultanément ou non, commutation pour raccorder l'élément magnéto-calorique 4a à l'échangeur de calories 7.

En mode "refroidissement", les températures maximales "T supérieure" correspondant à θ2n et minimales "T minimale" correspondant à θ4n, du fluide caloporteur, sont de plus en plus basses. De ce fait, la température moyenne "T moyenne" du fluide caloporteur est également de plus en plus basse, d'où un pouvoir réfrigérant et une efficacité du dispositif la et du procédé croissants au fur et à mesure des cycles de fonctionnement jusqu'à atteindre la température de refroidissement minimale "T Basse" de l'élément magnéto-calorique 4a à laquelle la température du fluide caloporteur se stabilisera.

En mode "chauffage" illustré par les courbes de la figure 2B, le procédé se décompose en plusieurs cycles successifs sensiblement similaires aux précédents. Ce procédé se différencie du précédent par le fait que les valeurs des consignes de commutation Cn et d'impulsion In sont différentes des précédentes et choisies de manière à obtenir les étapes successives suivantes :
Cycle 1 (démarrage) :
   Préparation : On positionne les moyens de commutation 11 de sorte que l'élément magnéto-calorique 4a soit raccordé à l'échangeur de calories 7.
Démarrage :
   On alimente l'électro-aimant 2a par une impulsion électrique 9a d'une intensité I qui génère dans l'élément magnétique un champ magnétique compris entre 0,05 - Tesla et 10 Teslas, et de préférence supérieur à 2 Teslas, de durée t comprise entre 10⁻⁹ seconde et 60 secondes et de préférence inférieure à 10⁻² seconde.
Cycle n :
   Etape 1 - cycle n :
      Pendant l'impulsion électrique 9a, chauffage du fluide caloporteur jusqu'à une température θ1n (température étape 1 cycle en cours), supérieure à la température θ0 de départ ou à la température θ4n-1 (température étape 4 cycle précédent) mais supérieure à la température θ1n-1 (température étape 1 cycle précédent). Transfert des calories par l'échangeur de calories 7.
   Etape 2 - cycle n :
      Après l'impulsion électrique 9a, chauffage du fluide caloporteur sous l'inertie de l'effet magnéto-calorique chauffant, jusqu'à une température θ2n (température étape 2 cycle en cours) supérieure à la température θ1n (température étape 1 cycle en cours) correspondant à la température maximale du fluide caloporteur lors de ce cycle n, mais inférieure à la température θ2n+1 (température étape 2 cycle suivant) correspondant à la température maximale du fluide caloporteur lors du cycle suivant. Transfert des calories par l'échangeur de calories 7.
   Etape 3 - cycle n :
      A la fin de l'inertie de l'effet de l'inertie magnéto-calorique chauffant, effet magnéto-calorique refroidissant. Refroidissement du fluide caloporteur jusque une température θ3n (température étape 3 cycle en cours) inférieure à la température θ2n et inférieure à la température θ2n+1 (température étape 2 cycle suivant). Transfert des calories par l'échangeur de calories 7.
      Détection de la consigne de commutation Cn et commutation pour raccorder l'élément magnéto-calorique 4a à l'échangeur de frigories 8.
   Etape 4 - cycle n :
      Effet magnéto-calorique refroidissant, refroidissement du fluide caloporteur jusqu'à une température θ4n (température étape 4 cycle en cours) supérieure à la température 90n et correspondant à la température de départ du fluide caloporteur de ce cycle n. Transfert des frigories par l'échangeur de frigories 8. Détection de la consigne d'impulsion In et alimentation de l'électro-aimant 2a par une nouvelle impulsion électrique 9a. Simultanément ou non, commutation pour raccorder l'élément magnéto-calorique 4a à l'échangeur de calories 7.

En mode "chauffage" les températures maximales "T supérieure" correspondant à θ2n et minimales θ"T minimale" correspondant à θ4n, du fluide caloporteur, sont de plus en plus élevées. De ce fait, la température moyenne "T moyenne" du fluide caloporteur est également de plus en plus élevée, d'où un pouvoir chauffant et une efficacité du dispositif 1a croissants au fur et à mesure des cycles de fonctionnement jusqu'à atteindre la température de chauffage maximale "T Haute" de l'élément magnéto-caloriques 4a à laquelle la température du fluide caloporteur se stabilisera.

### Meilleure manière de réaliser l'invention :

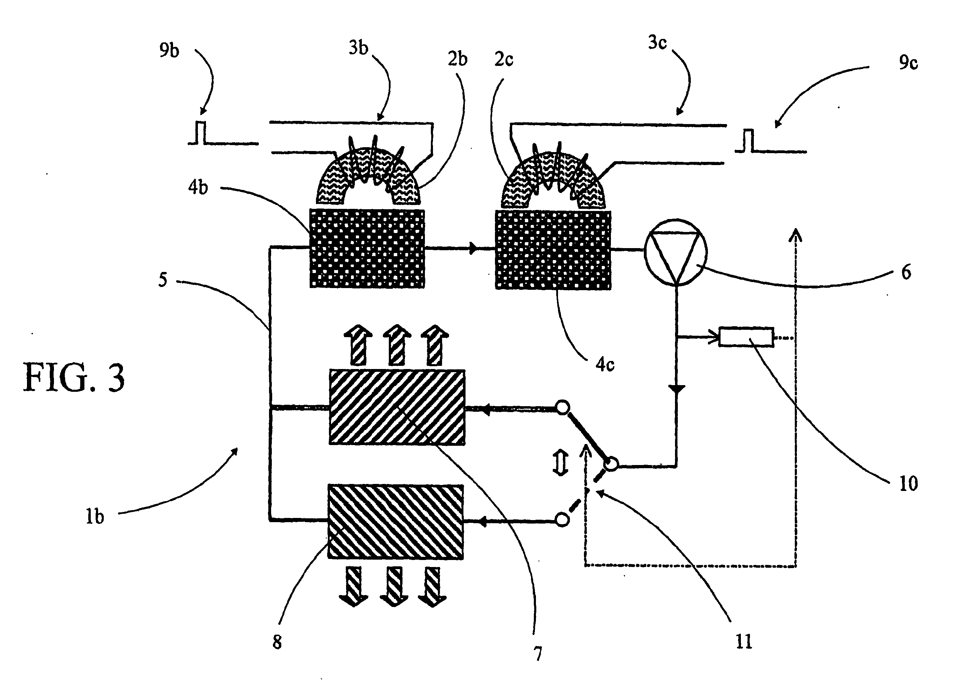

Le dispositif 1b de la figure 3 est sensiblement similaire au précédent. Il s'en différencie par le fait qu'il comporte deux éléments magnéto-caloriques 4b, 4c, raccordés entre eux par le circuit 5 de fluide caloporteur en série, ces éléments magnéto-caloriques 4b, 4c pouvant avoir des caractéristiques magnéto-caloriques sensiblement similaires ou différentes. Les éléments magnéto-caloriques 4b, 4c peuvent également être raccordés entre eux en parallèle ou selon une combinaison série/parallêle. Il est également possible de prévoir des groupes d'éléments magnéto-caloriques, ces groupes étant raccordés entre eux en série, en parallèle ou selon une combinaison série/parallèle. Le dispositif 1b et le procédé sont ainsi facilement évolutifs.

Chaque élément magnéto-calorique 4b, 4c est sollicité par un électro-aimant 2b, 2c relié à une alimentation électrique 3b, 3c dissociée, ces alimentations électriques 3b, 3c étant commandées par une ou plusieurs unités de commande (non représentées). Il est ainsi possible de générer de manière dissociée, pour chaque électro-aimant 2b, 2c, des impulsions électriques 9b, 9c, simultanément ou successivement, avec ou sans période de chevauchement de ces impulsions électriques 9b, 9c.

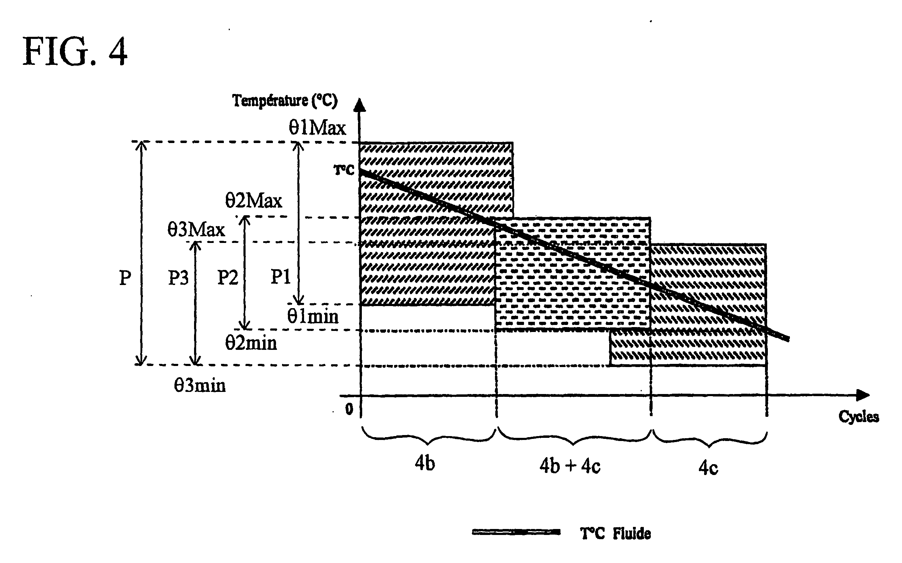

Cette configuration permet de combiner les propriétés magnéto-caloriques de plusieurs éléments magnéto-caloriques 4b, 4c, ce qui est particulièrement avantageux lorsqu'elles sont différentes. Le fonctionnement d'un tel dispositif 1b est décrit en référence au graphe de la figure 4 qui illustre sous forme de surfaces hachurées les plages de température P1, P2, P3 accessibles en utilisant successivement :
- un premier élément magnéto-calorique 4b seul pour obtenir la plage de température P1 située entre θ1Max et θ1min,
- un premier élément magnéto-calorique 4b et un second élément magnéto-calorique 4c simultanément pour obtenir la plage de température P2 située entre θ2Max et θ2min,
- le second élément magnéto-calorique 4c seul pour obtenir la plage de température P3 située entre θ3Max et θ3min.
Ainsi, en combinant les propriétés magnéto-caloriques différentes des premier et second éléments magnéto-caloriques, on peut couvrir une plage totale de températures P très importante située entre θ1Max et θ3min.

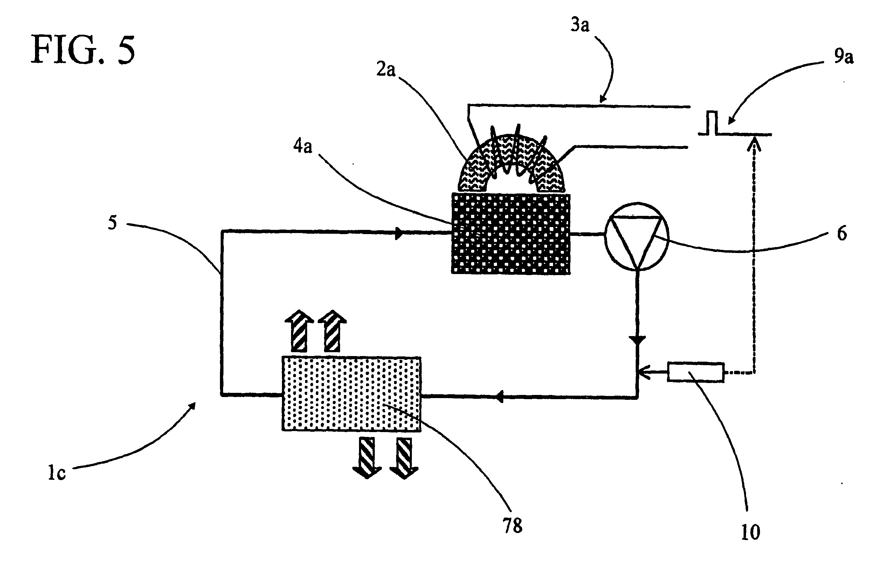

Le dispositif 1c de la figure 5 est sensiblement similaire au dispositif de la figure 1. Il s'en différencie par le fait qu'il ne comporte qu'un échangeur thermique "mixte" 78 pour transférer successivement les calories et les frigories.

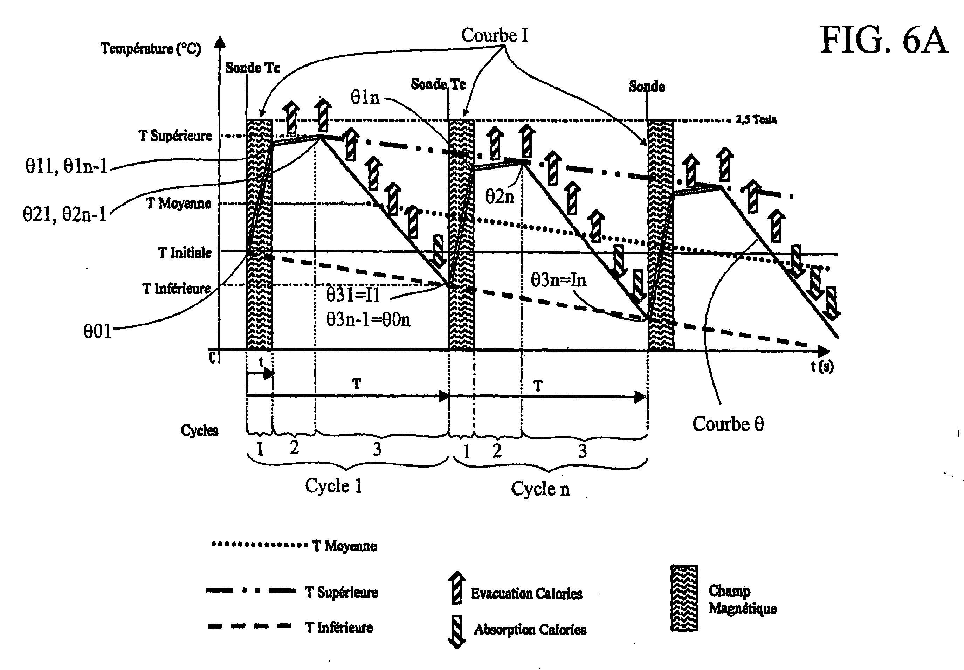

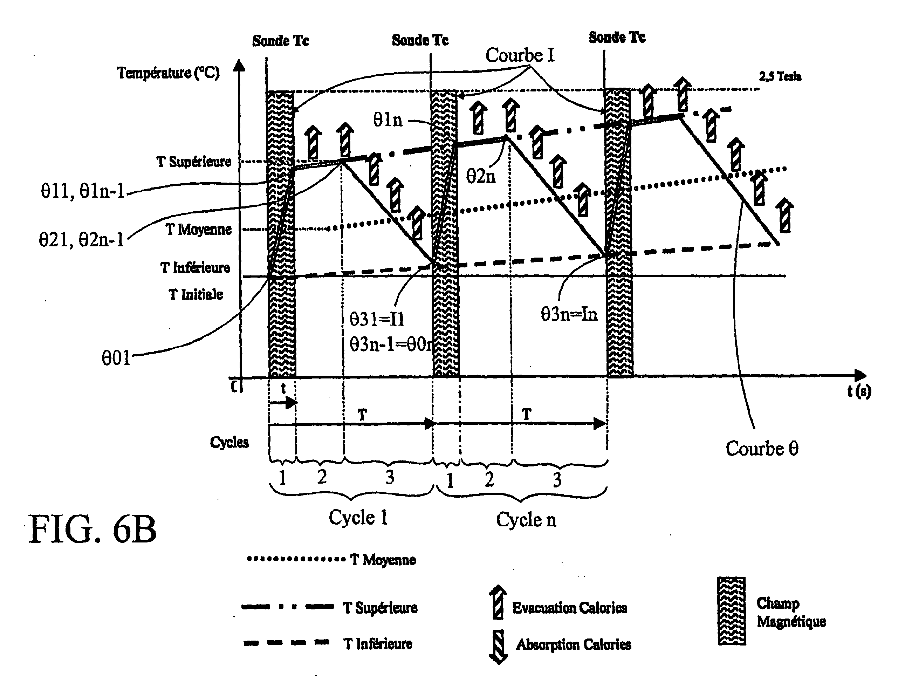

Le procédé utilisant ce dispositif 1c est décrit en référence aux courbes d'impulsion "Courbe "I et de température "Courbe θ" du fluide caloporteur des figures 6A et 6B, respectivement selon des modes "refroidissement" et "chauffage". Ce procédé est sensiblement similaire à celui du dispositif la de la figure 1 illustré par les figures 2A et 2B.

Le fonctionnement en mode "refroidissement" illustré par la figure 6A se différencie principalement de celui de la figure 2A par le fait que, comme il n'y a qu'un échangeur thermique 78, il n'y a pas de commutation et l'échangeur thermique 78 reste en permanence relié à l'élément magnéto-calorique 4a pour successivement transférer les calories puis les frigories. Le fonctionnement ne présente donc que les trois étapes suivantes pour chaque cycle n :
Etape 1 - cycle n :
   Impulsion électrique 9a, chauffage du fluide caloporteur jusqu'à une température θ1n (température étape 1 cycle en cours), supérieure à la température θ0n de départ ou à la température θ4n-1 (température étape 3 cycle précédent) et à la température θ1n-1 (température étape 1 cycle précédent). Transfert des calories par l'échangeur thermique 78.
Etape 2 - cycle n :
   Après 1 impulsion électrique 9a, chauffage du fluide caloporteur sous 1 inertie de l'effet magnéto-calorique chauffant, jusqu'à une température θ2n (température étape 2 cycle en cours) supérieure à la température θ1n (température étape 1 cycle en cours) correspondant à la température maximale du fluide caloporteur lors de ce cycle n, et supérieure à la température θ2n+1 (température étape 2 cycle suivant) correspondant à la température maximale du fluide caloporteur lors du cycle suivant. Transfert des calories par l'échangeur thermique 78.
Etape 3 - cycle n :
   Effet magnéto-calorique refroidissant à la fin de l'inertie de l'effet de l'inertie magnéto-calorique chauffant, effet magnéto-calorique refroidissant. Refroidissement du fluide caloporteur jusqu'à une température θ3n (température étape 3 cycle en cours) inférieure à la température θ0n et correspondant à la température de départ du fluide caloporteur de ce cycle n. Transfert des calories puis des frigories par l'échangeur thermique 78. Détection de la consigne d'impulsion In et alimentation de l'électro-aimant 2a par une nouvelle impulsion électrique 9a.

Le fonctionnement en mode "chauffant" illustré par la figure 6B se différencie de celui de la figure 2B par le fait que l'effet magnéto-calorique refroidissant n'est pas utilisé. En effet, le paramètre d'impulsion In est réglé de sorte que l'impulsion électrique 9a soit générée avant que la température 93n ne soit inférieure à la température θ0n. Le fonctionnement ne présente donc que les trois étapes suivantes pour chaque cycle n :
Etape 1- cycle n :
   Impulsion électrique 9a, chauffage du fluide caloporteur jusqu'à une température θ1n (température étape 1 cycle en cours), supérieure à la température θ0n de départ ou à la température θ3n-1 (température étape 3 cycle précédent) mais inférieure à la température θ1n-1 (température. étape 1 cycle précédent). Transfert des calories par l'échangeur thermique 78.
Etape 2 - cycle n :
   Après l'impulsion électrique 9a, chauffage du fluide caloporteur sous l'inertie de l'effet magnéto-calorique chauffant, jusqu'à une température θ2n (température étape 2 cycle en cours) supérieure à la température θ1n (température étape 1 cycle en cours) correspondant à la température maximale du fluide caloporteur lors de ce cycle n, mais inférieure à la température θ2n+1 (température étape 2 cycle suivant) correspondant à la température maximale du fluide caloporteur lors du cycle suivant. Transfert des calories par l'échangeur thermique 78.
Etape 3 - cycle n :
   Effet magnéto-calorique refroidissant à la fin de l'inertie de l'effet de l'inertie magnéto-calorique chauffant, effet magnéto-calorique refroidissant. Refroidissement du fluide caloporteur jusqu'à une température 93n (température étape 3 cycle en cours) supérieure à la température θ0n et correspondant à la température de départ du fluide caloporteur de ce cycle n. Transfert des calories puis des frigories par l'échangeur thermique 78. Détection de la consigne d'impulsion In et alimentation de l'électro-aimant 2a par une nouvelle impulsion électrique 9a.

De manière générale, dans ces exemples, l'élément magnétique 2a-c et l'élément magnéto-calorique 4a-c sont fixes l'un par rapport à l'autre. Il est néanmoins possible de les prévoir mobiles. Il est également possible d'utiliser un nombre supérieur d'éléments magnéto-caloriques 4a-c et/ou d'électro-aimants 2a-c et/ou d'échangeurs thermiques 7, 8, 78.

Selon d'autres variantes de réalisation non représentées, il est possible d'utiliser plusieurs échangeurs thermiques 7, 8, 78 ou groupes d'échangeurs thermiques reliés au circuit de fluide caloporteur en série, en parallèle ou selon une combinaison série/parallèle. Le dispositif 1a-c et le procédé sont ainsi facilement évolutifs.

### Possibilités d'application industrielle :

Ce dispositif 1a-c et ce procédé peuvent être utilisés pour toute application industrielle ou domestique de refroidissement, de chauffage, de climatisation, de tempérage.

Cette description met bien en évidence que le dispositif 1a-c et le procédé selon l'invention permettent de répondre aux buts fixés. Ils permettent notamment de s'affranchir de tout problème d'étanchéité inhérent aux dispositifs comportant des éléments magnéto-caloriques et/ou des électro-aimants ou autres moyens magnétiques mobiles les uns par rapport aux autres.

De plus, ils sont de conception très simple et ne nécessitent aucun moyen de mise en mouvement pour déplacer les éléments magnéto-caloriques 4a-c et/ou les électro-aimants 2a-c. Ils sont de ce fait faibles consommateurs d'énergie et nécessitent un nombre limité de pièces et d'organes mécaniques d'où une maintenance réduite et des risques de pannes limités.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Dispositif (1a-c) de génération de thermies à matériau magnéto-calorique comportant au moins un élément magnétique (2a-c) destiné à générer un champ magnétique, au moins un élément magnéto-calorique (4a-c) destiné à être soumis de manière alternée audit champ magnétique pour générer des calories et des frigories, au moins un circuit (5) de fluide caloporteur dont au moins une portion est disposée dans l'environnement immédiat dudit élément magnéto-calorique (4a-c) de manière à récupérer au moins une partie desdites calories et/ou frigories qu'il émet, ledit circuit (5) étant couplé à des moyens de circulation (6) et à au moins un échangeur thermique (7, 8, 78) agencé pour transférer au moins une partie desdites calories et/ou frigories récupérées par ledit fluide caloporteur, **caractérisé en ce que** ledit élément magnétique est un électro-aimant (2a-c) couplé à au moins une alimentation électrique (3a-c) asservie par au moins une unité de commande (20) agencée pour générer des impulsions électriques (9a-c) de manière à créer un champ magnétique impulsionnel, ces impulsions électriques (9a-c) d'intensité I, de durée t et de fréquence T étant déclenchées en fonction d'au moins un paramètre d'impulsion prédéterminé, ledit dispositif comportant au moins un capteur thermique (10) agencé pour déterminer la température dudit fluide caloporteur, cette température de fluide définissant au moins un paramètre d'impulsion.

2. Dispositif (1a, 1b) selon la revendication 1, **caractérisé en ce que** lesdits moyens de récupération comportent au moins deux échangeurs thermiques (7, 8) reliés audit circuit (5) en série, en parallèle ou selon une combinaison série/parallèle.

3. Dispositif (1a, 1b) selon la revendication 2, **caractérisé en ce que** lesdits moyens de récupération comportent au moins un échangeur thermique de calories (7) agencé pour transférer les calories et au moins un échangeur thermique de frigories (8) agencé pour transférer les frigories, lesdits échangeurs thermiques (7, 8) étant couplés à des moyens de commutation (11) asservis par une unité de commande agencée pour raccorder successivement chaque échangeur thermique (7, 8) audit élément magnéto-calorique (4a-c) en fonction d'au moins un paramètre de commutation prédéterminé.

4. Dispositif (1a-c) selon la revendication 1, **caractérisé en ce que** ladite unité de commande est agencée pour que ladite fréquence T soit comprise 60 secondes et 1/150^{ème} de seconde et de préférence inférieure à 2 secondes.

5. Dispositif (1a-c) selon la revendication 1, **caractérisé en ce que** ladite unité de commande est agencée pour que le rapport T/t soit compris entre 10 et 100 000, et de préférence supérieur à 1000.

6. Dispositif (1a-c) selon la revendication 1, **caractérisé en ce que** ladite unité de commande est agencée pour que ladite intensité I génère, dans ledit élément magnétique, un champ magnétique compris entre 0,05 Tesla et 10 Teslas, et de préférence supérieure à 2 Teslas.

7. Dispositif (1a-c) selon la revendication 1, **caractérisé en ce que** ladite unité de commande comporte des moyens de réglage de l'un au moins des paramètres de l'impulsion choisi dans le groupe comprenant la durée t, la fréquence T, 1 intensité I.

8. Dispositif (1a-c) selon l'une quelconque des revendications 1 ou 3, **caractérisé en ce que** ladite unité de commande comporte des moyens de temporisation agencés pour déterminer l'intervalle de temps écoulé depuis la commutation et/ou l'impulsion électrique (9a-c) précédente, cet intervalle de temps définissant au moins un paramètre de commutation et/ou d'impulsion.

9. Dispositif (1a-c) selon l'une quelconque des revendications 1 ou 3, **caractérisé en ce que** ladite unité de commande comporte des moyens de réglage dudit paramètre de commutation et/ou d'impulsion prédéterminé.

10. Dispositif (1a-c) selon la revendication 1, **caractérisé en ce que** lesdits moyens de récupération comportent au moins un échangeur "mixte" (78) agencé pour transférer les calories et les frigories.

11. Dispositif (1b) selon la revendication 1, **caractérisé en ce qu'**il comporte au moins deux éléments magnéto-caloriques (4b, 4a) raccordés entre eux en série, en parallèle ou selon une combinaison série/parallèle.

12. Dispositif (1b) selon la revendication 11, **caractérisé en ce que** lesdits éléments magnéto-caloriques (4b, 4a) ont des caractéristiques magnéto-caloriques différentes.

13. Dispositif (1b) selon la revendication 11, **caractérisé en ce qu'**il comporte au moins deux électro-aimants (2b, 2c), chacun associé à un élément magnéto-calorique (4b, 4a) et au moins deux alimentations électriques (3b, 3c) agencées pour alimenter électriquement lesdits électro-aimants (2b, 2c) de manière dissociée.

14. Dispositif (1a-c) selon la revendication 1, **caractérisé en ce que** le noyau dudit élément magnétique (2a-c) est réalisé dans un matériau magnétique à forte rémanence.

15. Dispositif (1a-c) selon la revendication 1, **caractérisé en ce que** ledit élément magnétique (2a-c) et ledit élément magnéto-calorique (4a-c) sont fixes l'un par rapport à l'autre.

16. Procédé de génération de thermies à matériau magnéto-calorique au cours duquel on soumet au moins un élément matériau magnéto-calorique (4a-c) à au moins un électro-aimant (2a-c) alimenté par des impulsions électriques de manière à créer un champ magnétique impulsionnel pour générer des calories et des frigories, on récupère au moins une partie desdites calories et/ou desdites frigories générées par ledit élément magnéto-calorique (4a-c) au moyen d'un fluide caloporteur, on fait circuler dans au moins un circuit (5) dont on dispose au moins une portion dans l'environnement immédiat dudit élément magnéto-calorique (4a-c) et on transfert au moins une partie desdites calories et/ou frigories au moyen d'au moins un échangeur thermique (7, 8, 78), lesdites impulsions électriques (9a-c) d'intensité I, de durée t et à une fréquence T étant déclenchées en fonction d'au moins un paramètre d'impulsion prédéterminé, on détermine la température dudit fluide caloporteur et on utilise cette température du fluide comme paramètre d'impulsion.

17. Procédé selon la revendication 16, **caractérisé en ce que** l'on utilise au moins deux échangeurs thermiques que l'on relie audit circuit (7, 8) en série, en parallèle ou selon une combinaison série/parallèle.

18. Procédé selon la revendication 17, **caractérisé en ce que** l'on utilise au moins un échangeur de calories (7) pour transférer les calories et au moins un échangeur de frigories (8) pour transférer les frigories que l'on raccorde alternativement à l'élément magnéto-caloriques (4a-c) en fonction d'au moins un paramètre de commutation prédéterminé.

19. Procédé selon la revendication 16, **caractérisé en ce que** l'on règle au moins l'un desdits paramètres d'impulsion choisi dans le groupe comprenant la fréquence T de manière à ce qu'elle soit comprise entre 60 secondes et 1/150^{ème} de seconde et de préférence inférieure à 2 secondes, le rapport T/t soit compris entre 10 et 100 000, et de préférence supérieur à 1 000, ladite intensité I de manière à ce qu'elle génère dans ledit élément magnétique un champ magnétique compris entre 0,05 Tesla et 10 Teslas, et de préférence supérieure à 2 Teslas.

20. Procédé selon l'une quelconque des revendications 16 ou 18, **caractérisé en ce que** l'on détermine l'intervalle de temps écoulé depuis la commutation et/ou l'impulsion électrique (9a-c) précédente, et **en ce que** l'on utilise cet intervalle de temps comme paramètre de commutation et/ou d'impulsion.

21. Procédé selon la revendication 16, **caractérisé en ce que** l'on utilise au moins deux éléments magnéto-caloriques (4b, 4c) ayant des caractéristiques magnéto-caloriques différentes que l'on raccorde entre eux en série, en parallèle ou selon une combinaison série/parallèle.

22. Procédé selon la revendication 21, **caractérisé en ce que** l'on utilise au moins deux électro-aimants (2b, 2c), chacun associé à élément magnéto-calorique (4b, 4c), et au moins deux alimentations électriques (3b, 3c), et **en ce que** l'on utilise dans des phases successives, un premier élément magnéto-calorique (4b) seul puis, un premier élément magnéto-calorique (4b) et un second élément magnéto-calorique (4c) simultanément et enfin, le second élément magnéto-calorique (4c) seul de manière à combiner les propriétés magnéto-caloriques des premier et second éléments magnéto-caloriques (4b, 4c).

## Claims

1. Device (1a-c) for the generation of thermal units using magnetocaloric material, which comprises at least one magnetic element (2a-c) intended to generate a magnetic field, at least one magnetocaloric element (4a-c) intended to be alternatively subjected to the said magnetic field in order to generate calories and frigories, at least one circuit (5) for thermal exchange fluid, of which at least a portion is placed in the immediate vicinity of the said magnetocaloric element (4a-c) so as to recover at least part of the said calories and/or frigories that it emits, the said circuit (5) being coupled to means of circulation (6) and to at least one heat exchanger (7, 8, 78) set up to transfer at least part of the said calories and/or frigories recovered by the said thermal exchange fluid, **characterized in that** the said magnetic element is an electromagnet (2a-c) coupled to at least one power supply (3a-c) controlled by at least one control unit (20) set up to generate electric pulses (9a-c) so as to create an impulsive magnetic field, with these electric pulses (9a-c) of intensity I, duration t and frequency T being triggered as a function of at least one predetermined pulse parameter, the said device comprising at least one thermal sensor (10) set up to determine the temperature of the said thermal exchange fluid, said fluid temperature defining at least one pulse parameter.

2. Device (1a, 1b) according to claim 1, **characterized in that** the said means of recovery comprise at least two heat exchangers (7, 8) connected to the said circuit (5) serially, in parallel or as a serial/parallel combination.

3. Device (1a, 1b) according to claim 2, **characterized in that** the said means of recovery comprise at least one heat exchanger for calories (7) set up to transfer the calories and at least one heat exchanger for frigories (8) set up to transfer the frigories, with the said heat exchangers (7, 8) coupled to means of commutation (11) controlled by a control unit set up to successively connect each heat exchanger (7, 8) to the said magnetocaloric element (4a-c) as a function of at least one predetermined commutation parameter.

4. Device (1a-c) according to claim 1, **characterized in that** the said control unit is set up so that the aforesaid frequency T ranges between 60 seconds and 1/150^{th} of a second, and with a value preferably lower than 2 seconds.

5. Device (1a-c) according to claim 1, **characterized in that** the said control unit is set up so that the T/t ratio ranges between 10 and 100,000, and with a value preferably higher than 1,000.

6. Device (1a-c) according to claim 1, **characterized in that** the said control unit is set up so that the said intensity I generates, in the said magnetic element, a magnetic field that ranges between 0.05 Tesla and 10 Teslas, and with a value preferably higher than 2 Teslas.

7. Device (1a-c) according to claim 1, **characterized in that** the said control unit comprises means for the adjustment of at least one of the pulse parameters selected within the group that includes the duration t, the frequency T, the intensity I.

8. Device (1a-c) according to any of the claims 1 or 3, **characterized in that** the said control unit comprises timing means set up to determine the time interval elapsed since the preceding commutation and/or electric pulse (9a-c), with this time interval defining at least one commutation and/or pulse parameter.

9. Device (1a-c) according to any of the claims 1 or 3, **characterized in that** the said control unit comprises means for the adjustment of the said predetermined commutation and/or pulse parameter.

10. Device (1a-c) according to claim 1, **characterized in that** the said means of recovery comprise at least a "mixed" exchanger (78) set up to transfer the calories and the frigories.

11. Device (1b) according to claim 1, **characterized in that** it comprises at least two magnetocaloric elements (4b, 4a) interconnected in serially, in parallel or as a serial/parallel combination.

12. Device (1b) according to claim 11, **characterized in that** the said magnetocaloric elements (4b, 4a) have different magnetocaloric characteristics.

13. Device (1b) according to claim 11, **characterized in that** it comprises at least two electromagnets (2b, 2c), each one associated to a magnetocaloric element (4b, 4a) and at least two power supplies (3b, 3c) set up to separately feed the said electromagnets (2b, 2c) electrically.

14. Device (1a-c) according to claim 1, **characterized in that** the core of the said magnetic element (2a-c) is made of a high remanence magnetic material.

15. Device (1a-c) according to claim 1, **characterized in that** the said magnetic element (2a-c) and the said magnetocaloric element (4a-c) are fixed in relation to one another.

16. Method for the generating thermal units using magnetocaloric material during which at least one magnetocaloric material element (4a-c) is subjected to at least one electromagnet (2a-c) fed with electric pulses so as to create an impulsive magnetic field to generate calories and frigories, where at least part of the said calories and/or of the said frigories generated by the said magnetocaloric element (4a-c) are recovered using a thermal exchange fluid, which is made to circulate in at least one circuit (5) of which at least a portion is placed in the immediate vicinity of the said magnetocaloric element (4a-c) and at least part of the said calories and/or frigories are transferred using at least one heat exchanger (7, 8, 78), the said electric pulses (9a-c) of intensity I, duration t and at a frequency T being triggered as a function of at least one predetermined pulse parameter, the temperature of the aforesaid thermal exchange fluid is determined and this fluid temperature is used as pulse parameter.

17. Method according to claim 16, **characterized in that** at least two heat exchangers are used, which are connected to the aforesaid circuit (7, 8) serially, in parallel or as a serial/parallel combination.

18. Method according to claim 17, **characterized in that** at least one calories exchanger (7) is used to transfer the calories and at least one frigories exchanger (8) is used to transfer the frigories, which are alternatively connected to the magnetocaloric element (4a-c) as a function of at least one predetermined commutation parameter.

19. Method according to claim 16, **characterized in that** at least one of the said pulse parameters is adjusted, selected within the group, which includes the frequency T so that it ranges between 60 seconds and 1/150^{th} of a second and with a value preferably lower than 2 seconds, the T/t ratio so that it ranges between 10 and 100,000, and with a value preferably the higher than 1,000, the said intensity I so that it generates a magnetic field in the said magnetic element, which ranges between 0.05 Tesla and 10 Teslas, and with a value preferably higher than 2 Teslas.

20. Method according to any of the claims 16 or 18, **characterized in that** the time interval elapsed since the preceding commutation and/or electric pulse (9a-c) is determined, and **in that** this time interval is used as commutation and/or pulse parameter.

21. Method according to claim 16, **characterized in that** at least two magnetocaloric elements (4b, 4c) are used, which have different magnetocaloric characteristics and which are interconnected serially, in parallel or as a serial/parallel combination.

22. Method according to claim 21, **characterized in that** at least two electromagnets (2b, 2c) are used, each one associated to a magnetocaloric element (4b, 4c), and at least two power supplies (3b, 3c), and **in that** in successive phases, a first magnetocaloric element (4b) is used on its own, then a first magnetocaloric element (4b) and a second magnetocaloric element (4c) are used simultaneously and finally, the second magnetocaloric element (4c) is used on its own so as to combine the magnetocaloric properties of the first and second magnetocaloric elements (4b, 4c).

## Patentansprüche

1. Vorrichtung (1a-c) zur Erzeugung von Megakalorien aus magnetokalorischem Werkstoff, die mindestens ein Magnetelement (2a-c), welches zur Erzeugung eines Magnetfeldes bestimmt ist, mindestens ein magnetokalorisches Element (4a-c), welches dazu bestimmt ist, wechselweise dem Magnetfeld ausgesetzt zu werden, um Kalorien und Kälte zu erzeugen, und mindestens ein Kreislauf (5) von Wärmeübertragungsfluid aufweist, wovon mindestens ein Teil in der unmittelbaren Umgebung des magnetokalorischen Elementes (4a-c) so angeordnet ist, dass es mindestens einen Teil der Kalorien und/oder Kälte, die es abgibt, zurückgewinnt, wobei der Kreislauf (5) mit Zirkulationseinrichtungen (6) und mit mindestens einem Wärmetauscher (7,8,78) verbunden ist, der angeordnet ist, um mindestens einen Teil der durch das Wärmeübertragungsfluid zurückgewonnenen Kalorien und/oder Kälte zu übertragen, **dadurch gekennzeichnet, dass** das Magnetelement ein Elektromagnet (2a-c) ist, der mit mindestens einer Stromversorgung (3a-c) verbunden ist, die von mindestens einer Steuerungseinheit (20) gesteuert wird, die angeordnet ist, um elektrische Impulse (9a-c) zu erzeugen, so dass ein Impulsmagnetfeld erzeugt wird, wobei die elektrischen Impulse (9a-c) mit der Intensität I, der Zeitdauer t und der Frequenz T in Abhängigkeit von mindestens einem zuvor festgelegten Impulsparameter ausgelöst werden, wobei die Vorrichtung mindestens einen Thermosensor (10) aufweist, der angeordnet ist, um die Temperatur des Wärmeübertragungsfluids zu bestimmen, wobei die Temperatur des Fluids mindestens einen Impulsparameter bestimmt.

2. Vorrichtung (1a,1b) nach Anspruch 1, **dadurch gekennzeichnet, dass** die Rückgewinnungseinrichtungen mindestens zwei Wärmetauscher (7,8) aufweisen, die in Reihe, parallel oder gemäß einer reihenparallelen Kombination mit dem Kreislauf (5) verbunden sind.

3. Vorrichtung (1a, 1b) nach Anspruch 2, **dadurch gekennzeichnet, dass** die Rückgewinnungseinrichtungen mindestens einen Wärmetauscher (7) für Kalorien aufweisen, der zur Übertragung der Kalorien angeordnet ist, und mindestens einen Wärmetauscher (8) für Kälte, der zur Übertragung der Kälte angeordnet ist, wobei die Wärmetauscher (7,8) mit Schalteinrichtungen (11) verbunden sind, die von einer Steuerungseinheit gesteuert werden, die angeordnet ist, um aufeinanderfolgend jeden Wärmetauscher (7,8) mit dem magnetokalorischen Element (4a-c) in Abhängigkeit von mindestens einem zuvor festgelegten Schaltparameter zu verbinden.

4. Vorrichtung (1a-c) nach Anspruch 1, **dadurch gekennzeichnet, dass** die Sieuerungseinheit so ausgebildet ist, dass die Frequenz T einschließlich 60 Sekunden und 1/150tel Sekunde, und vorzugsweise unter 2 Sekunden beträgt.

5. Vorrichtung (1a-c) nach Anspruch 1, **dadurch gekennzeichnet, dass** die Steuerungseinheit so ausgebildet ist, dass das Verhältnis T/t zwischen einschließlich 10 und 100 000 und vorzugsweise über 1 000 beträgt.

6. Vorrichtung (1a-c) nach Anspruch 1, **dadurch gekennzeichnet, dass** die Steuerungseinheit so ausgebildet ist, dass die Intensität I in dem Magnetelement ein Magnetfeld erzeugt, welches zwischen einschließlich 0,05 Tesla und 10 Tesla, und vorzugsweise über 2 Tesla beträgt.

7. Vorrichtung (1a-c) nach Anspruch 1, **dadurch gekennzeichnet, dass** die Steuerungseinheit Einrichtungen zur Regelung von mindestens einem der Impulsparameter aufweist, die aus der Gruppe ausgewählt werden, welche die Zeitdauer t, die Frequenz T, die Intensität I umfasst.

8. Vorrichtung (1a-c) nach einem der Ansprüche 1 oder 3, **dadurch gekennzeichnet, dass** die Steuerungseinheit Zeitsteuerungseinrichtungen aufweist, die angeordnet sind, um das Zeitintervall zu bestimmen, welches seit der Schaltung und/oder dem vorangegangenen elektrischen Impuls (9a-c) abgelaufen ist, wobei das Zeitintervall mindestens einen Schalt- und/oder Impulsparameter bestimmt.

9. Vorrichtung (1a-c) nach einem der Ansprüche 1 oder 3, **dadurch gekennzeichnet, dass** die Steuerungseinheit Einrichtungen zur Regelung des zuvor festgelegten Schalt- und/oder Impulsparameters aufweist.

10. Vorrichtung (1a-c) nach Anspruch 1, **dadurch gekennzeichnet, dass** die Rückgewinnungseinrichtungen mindestens ein "Misch"-Tauschelement (78) aufweisen, welches angeordnet ist, um die Kalorien und die Kälte zu übertragen.

11. Vorrichtung (1b) nach Anspruch 1, **dadurch gekennzeichnet, dass** sie mindestens zwei magnetokalorische Elemente (4b,4a) aufweist, die in Reihe, parallel oder gemäß einer reihenparallelen Kombination miteinander verbunden sind.

12. Vorrichtung (1b) nach Anspruch 11, **dadurch gekennzeichnet, dass** die magnetokalorischen Elemente (4a,4b) unterschiedliche magnetokalorische Merkmale aufweisen.

13. Vorrichtung (1b) nach Anspruch 11, **dadurch gekennzeichnet, dass** sie mindestens zwei Elektromagnete (2b,2c), die jeweils mit einem magnetokalorischen Element (4b,4a) verbunden sind, und mindestens zwei Stromversorgungen (3b,3c) aufweist, die zur getrennten elektrischen Versorgung der Elektromagnete (2b,2c) angeordnet sind.

14. Vorrichtung (1a-c) nach Anspruch 1, **dadurch gekennzeichnet, dass** der Kern des Magnetelementes (2a-c) aus einem Magnetwerkstoff mit starker Remanenz hergestellt ist.

15. Vorrichtung (1a-c) nach Anspruch 1, **dadurch gekennzeichnet, dass** das Magnetelement (2a-c) und das magnetokalorische Element (4a-c) im Verhältnis zueinander befestigt sind.

16. Verfahren zur Erzeugung von Megakalorien aus magnetokalorischem Werkstoff, während dem mindestens ein Element aus magnetokalorischem Werkstoff (4a-c) mindestens einem Elektromagneten (2a-c) ausgesetzt wird, der durch elektrische Impulse so versorgt wird, dass ein Impulsmagnetfeld erzeugt wird, um Kalorien und Kälte zu erzeugen, wobei mindestens ein Teil der Kalorien und/oder der Kälte zurückgewonnen wird, die durch das magnetokalorische Element (4a-c) erzeugt wurden, und zwar mittels eines Wärmeübertragungsfluids, wovon in wenigstens einem verfügbaren Kreislauf (5) eine Zirkulation erzeugt wird, und zwar in mindestens einem Teil in der unmittelbaren Umgebung des magnetokalorischen Elementes (4a-c), wobei mindestens ein Teil der Wärme und/oder der Kälte mittels mindestens einem Wärmetauscher (7,8,78) übertragen wird, wobei die elektrischen Impulse (9a-c) der Intensität I, der Zeitdauer t und zu einer Frequenz T in Abhängigkeit von mindestens einem zuvor festgelegten Impulsparameter ausgelöst werden, wobei die Temperatur des Wärmeübertragungsfluids bestimmt wird, und diese Temperatur des Fluids als Impulsparameter verwendet wird.

17. Verfahren nach Anspruch 16, **dadurch gekennzeichnet, dass** mindestens zwei Wärmetauscher verwendet werden, die in Reihe, parallel oder gemäß einer reihenparallelen Kombination mit dem Kreislauf (7,8) verbunden sind.

18. Verfahren nach Anspruch 17, **dadurch gekennzeichnet, dass** mindestens ein Wärmetauscher (7) zur Übertragung der Kalorien und mindestens ein Kältetauscher (8) zur Übertragung der Kälte verwendet wird, der in Abhängigkeit von mindestens einem zuvor festgelegten Schaltparameter wechselweise mit dem magnetokalorischen Element (4a-c) verbunden wird.

19. Verfahren nach Anspruch 16, **dadurch gekennzeichnet, dass** dass mindestens einer der Impulsparameter, die aus der Gruppe ausgewählt werden, welche die Frequenz T umfasst, so geregelt wird, dass er zwischen einschließlich 60 Sekunden und 1/150tel Sekunde, und vorzugsweise unter 2 Sekunden beträgt, wobei das Verhältnis T/t zwischen einschließlich 10 und 100 000 und vorzugsweise über 1 000 beträgt, wobei die Intensität I so geregelt wird, dass sie in dem Magnetelement ein Magnetfeld erzeugt, welches zwischen einschließlich 0,05 Tesla und 10 Tesla, und vorzugsweise über 2 Tesla beträgt.

20. Verfahren nach einem der Ansprüche 16 oder 18, **dadurch gekennzeichnet, dass** das Zeitintervall bestimmt wird, welches seit der Schaltung und/oder dem vorangegangenen elektrischen Impuls (9a-c) abgelaufen ist, wobei das Zeitintervall als Schalt- und/oder Impulsparameter verwendet wird.

21. Verfahren nach Anspruch 16, **dadurch gekennzeichnet, dass** mindestens zwei magnetokalorische Elemente (4b,4c) verwendet werden, die unterschiedliche magnetokalorische Merkmale aufweisen, die in Reihe, parallel oder gemäß einer reihenparallelen Kombination miteinander verbunden sind.

22. Verfahren nach Anspruch 21, **dadurch gekennzeichnet, dass** mindestens zwei Elektromagnete (2b,2c) verwendet werden, die jeweils mit einem magnetokalorischen Element (4b,4c) verbunden sind, und mindestens zwei Stromversorgungen (3b,3c), und dass in den aufeinanderfolgenden Phasen ein erstes magnetokalorisches Element (4b) alleine, dann ein erstes magnetokalorisches Element (4b) und ein zweites magnetokalorisches Element (4c) gleichzeitig, und schließlich das zweite magnetokalorische Element (4c) alleine verwendet wird, um die magnetokalorischen Eigenschaften der ersten und zweiten magnetokalorischen Elemente (4b,4c) zu kombinieren.
